# EUROPEAN PATENT SPECIFICATION

(11) **EP 2 560 301 B1**
(45) Date of publication and mention of the grant of the patent: **02.01.2019**
(21) Application number: 10849731.4
(22) Date of filing: 19.10.2010
(51) Int. Cl.: H04J 3/16, H04Q 11/00

(54) **CROSSING CAPACITY PROCESSING METHOD FOR OPTICAL TRANSPORT NETWORK (OTN) EQUIPMENT AND OTN EQUIPMENT**
VERFAHREN ZUR KREUZUNGSKAPAZITÄTSVERARBEITUNG FÜR EIN OPTISCHES TRANSPORTNETZ (OTN)-GERÄT UND OTN-GERÄT
PROCÉDÉ DE TRAITEMENT DE CAPACITÉ DE CROISEMENT POUR UN ÉQUIPEMENT DE RÉSEAU DE TRANSPORT OPTIQUE (OTN) ET ÉQUIPEMENT OTN

(30) Priority: 13.04.2010 CN 201010164973
(43) Date of publication of application: 20.02.2013
(73) Proprietor: ZTE Corporation, Shenzhen, Guangdong 518057 (CN)
(72) Inventor: MA, Wenkai, Guangdong 518057 (CN); GENG, Jian, Guangdong 518057 (CN)
(74) Representative: Brevalex
(86) International application number: PCT/CN2010/077879
(87) International publication number: WO 2011/127722

(56) References cited:
- WO-A1-2008/092321
- CN-A- 1 791 057
- CN-A- 101 030 827
- CN-A- 101 146 240
- CN-A- 101 615 967
- CN-A- 101 826 920

## Description

### Field of the Invention

The disclosure relates to the field of communication, and in particular to a crossing capacity processing method for the Optical Transport Network (OTN) equipment and an OTN equipment.

### Background of the Invention

The Optical Transport Hierarchy (OTH) technology is a new generation of standardized digital transport architecture after the Synchronous Digital Hierarchy (SDH)/Synchronous Optical Network (SONET). The OTN based on OTH meets the development requirement of data bandwidth, and is a transparent transport technology developed in view of the large capacity and coarse-grained scheduling requirements of the backbone network hierarchy. The OTN makes the intelligent optical network become possible.

The OTN network performs scheduling based on the k-order Optical Data Unit ODUk (k=0,1,2,3) respectively. Specifically, a crossing scheduling unit is employed to perform processing separately to complete the connection scheduling function of ODUk (k=0,1,2,3). However, with the wide development of multimedia services, the volume of communication traffic increases sharply. Correspondingly, the service capacity of the OTN communication equipment increases sharply too. Therefore, how to realize large-capacity OTN service crossing becomes the research focus of the OTN communication equipment manufacturers.

In the related art, the electric-layer crossing scheduling in the transport network is limited by the number of high-speed serial buses of a single Field Programmable Gate Array (FPGA), resulting in restriction of the crossing capacity and difficulty of expansion.

WO 2008/09232 relates to a service scheduling system and method thereof in the field of service processing of the optical transfer netword. However, the above mentioned problem still remains unsolved by this document.

### Summary of the Invention

The main purpose of the disclosure is to provide a crossing capacity processing method for OTN equipment to at least solve one of the problems above.

In order to achieve the purpose above, according to one aspect of the disclosure, a crossing capacity processing method for OTN equipment is provided.

In the crossing capacity processing method for OTN equipment according to the disclosure, the OTN equipment comprises a service unit and a crossing unit, and the service unit comprises a first service subunit and a second service subunit. The method comprises steps of: dividing, by the first service subunit, data T1, which has been mapped to T timeslots in N/2 lower backplane buses of the first service subunit, into two parts of data T11 and data T12 with same number of timeslots; and dividing, by the second service subunit, data T2, which has been mapped to T timeslots in N/2 lower backplane buses of the second service subunit, into two parts of data T21 and data T22 with same number of timeslots, wherein N is the total number of backplane buses of the service unit; exchanging through an interconnected bus between the first service subunit and the second service subunit and recombining, by the first service subunit and the second service subunit, so that the first service subunit obtains data T3 consisting of the data T11 and the data T21, and the second service subunit obtains data T4 consisting of the data T12 and the data T22; and sending, by the first service subunit and the second service subunit, the data T3 and the data T4 to the crossing unit respectively, after a first and second overhead insertion process wherein the data T11 and the data T12 received by the crossing unit are in the same timeslots, and the data T21 and the data T22 received by the crossing unit are in the same timeslots.

Further, dividing, by the first service subunit, data T1, which has been mapped to T timeslots in N/2 lower backplane buses of the first service subunit, into two parts of the data T11 and the data T12 with same number of timeslots; and dividing, by the second service subunit, data T2, which has been mapped to T timeslots in N/2 lower backplane buses of the second service subunit, into two parts of the data T21 and the data T22 with same number of timeslots comprises: dividing, by the first service subunit, the data T1 into two parts of the data T11 and the data T12 with same number of timeslots based on odd and even timeslots; and dividing, by the second service subunit, the data T2 into two parts of the data T21 and the data T22 with same number of timeslots based on odd and even timeslots.

Further, exchanging through the interconnected bus between the first service subunit and the second service subunit and recombining by the first service subunit and the second service subunit comprises: exchanging the data T12 and the data T21 recombining the data T11 and the data T21 by the first service subunit to obtain the data T3; and recombining the data T12 and the data T22 by the second service subunit to obtain the data T4. Further, exchanging through the interconnected bus between the first service subunit and the second service subunit and recombining by the first service subunit and the second service subunit further comprises: the first service subunit dividing data T5, which is received from the crossing unit, into two parts of data T51 and data T52 with same number of timeslots and merging the data T12 and the data T52 into data T6; and the second service subunit dividing data T7, which is received from the crossing unit, into two parts of data T71 and data T72 with same number of timeslots and merging the data T21 and the data T71 into T8; exchanging the data T6 and the data T8 through the interconnect bus; merging and recovering the data T51 and the data T71 and de-mapping out corresponding client service data, by the first service subunit; and merging and recovering the data T72 and the data T52 and de-mapping out corresponding client service data, by the second service subunit.

Further, exchanging the data T6 and the data T8 through the interconnect bus comprises: the exchanged data in the interconnect bus comprising a frame header for identifying data of upper backplane bus and a frame header for identifying data of lower backplane bus.

In order to achieve the purpose above, according to another aspect of the disclosure, an OTN equipment is further provided.

The OTN equipment according to the disclosure comprises a service unit and a crossing unit, and the service unit comprises a first service subunit and a second service subunit; and the OTN equipment further comprises: an interconnect bus, configured to connect the first service subunit with the second service subunit, and to exchange data of the first service subunit and the second service subunit; the first service subunit comprises: a first dividing module, configured to divide data T1, which has been mapped to T timeslots in N/2 lower backplane buses of the first service subunit, into two parts of data T11 and data T12 with same number of timeslots, wherein N is the total number of backplane buses of the service unit; and a first lower backplane data merging module, configured to merge the data T11 and data T21 into data T3 which is sent to the crossing unit through a first overhead insertion processing module; and the second service subunit comprises: a second dividing module, configured to divide data T2, which has been mapped to the T timeslots in the N/2 lower backplane buses of the second service subunit, into two parts of the data T21 and data T22 with same number of timeslots; a second lower backplane data merging module, configured to merge the data T12 and the data T22 into data T4 which is sent to the crossing unit through a second overhead insertion processing module; wherein the data T11 and the data T12 received by the crossing unit are in the same timeslots, and the data T21 and the data T22 received by the crossing unit are in the same timeslots.

Further, the first dividing module divides the data T1 into two parts of the data T11 and the data T12 with same number of timeslots based on odd and even timeslots; and the second dividing module divides the data T2 into two parts of the data T21 and the data T22 with same number of timeslots based on odd and even timeslots.

Further, the first service subunit further comprises: a first upper backplane data dividing module, configured to divide data T5, which is received from the crossing unit, into two parts of data T51 and data T52 with same number of timeslots; a first interacted data merging module, configured to merge the data T12 and the data T52 into data T6; and a first data recovery module, configured to merge and recover the data T51 and data T71 and to de-map out the corresponding client service data; the second service subunit further comprises: a second upper backplane data dividing module, configured to divide data T7, which is received from the crossing unit, into two parts of the data T71 and data T72 with same number of timeslots; a second interacted data merging module, configured to merge the data T21 and the data T71 into data T8; and a second data recovery module, configured to merge and recover the data T72 and the data T52 and to de-map out the corresponding client service data; and the interconnect bus is further configured to exchange the data T6 and the data T8.

Further, the first service subunit and the second service subunit are Field Programmable Gate Array (FPGA) chips.

Further, the exchanged data in the interconnect bus comprises a frame header for identifying data of upper backplane bus and a frame header for identifying data of lower backplane bus.

With the above technical solution of the disclosure, the way of interconnecting the service subunits of the OTN equipment is employed to transmit one part of data that a single service subunit sends to the crossing unit to the other service subunit through the interconnect bus. Then the other service subunit sends the data to the crossing unit. Thus, the non-blocking crossing capacity expansion of the single service subunit is achieved. Therefore, the problem that crossing capacity is restricted due to that electric-layer crossing scheduling in the transport network is limited by the number of high-speed serial buses of the single service subunit is solved, the system cost is reduced and the utilization ratio of system is improved.

### Brief Description of the Drawings

For a better understanding of the disclosure, the drawings described herein are provided to constitute one part of the application. The schematic embodiments of the disclosure and the description thereof are used to illustrate the disclosure but not to limit the disclosure improperly. In the drawings:
Fig. 1 shows a flowchart of a crossing capacity processing method for OTN equipment according to an embodiment of the disclosure;
Fig. 2 shows a structure diagram of OTN equipment according to an embodiment of the disclosure;
Fig. 3 shows a structure diagram of OTN equipment according to a preferred embodiment of the disclosure;
Fig. 4 shows a diagram of a crossing capacity expansion device according to an embodiment of the disclosure; and
Fig. 5 shows a structure diagram of a service subunit of OTN equipment according to a preferred embodiment of the disclosure.

### Detailed Description of the Embodiments

The disclosure is described below in detail by reference to the drawings and in conjunction with the embodiments. It should be noted that the embodiments in the application and the features of the embodiments can be combined with each other if no conflict is caused.

OTN network completes the connection scheduling function of ODUk (k=0,1,2,3) through the crossing scheduling unit. With the sharp increase of the service capacity of the OTN communication equipment, realizing large-capacity OTN service crossing becomes the research focus of the OTN communication equipment manufacturers.

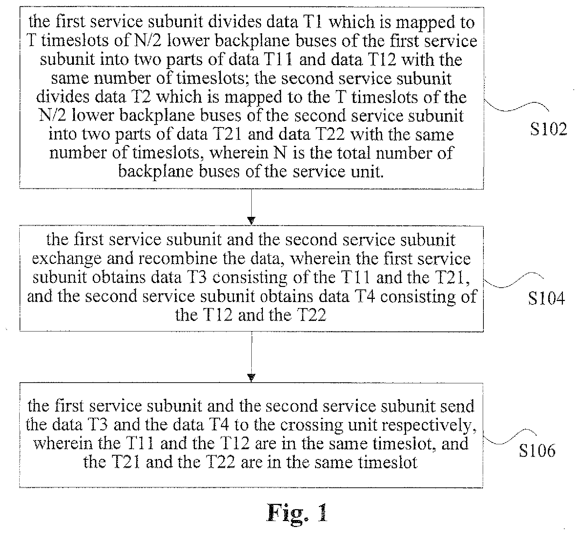

Fig. 1 shows a flowchart of a crossing capacity processing method for OTN equipment according to an embodiment of the disclosure, wherein the OTN equipment comprises a service unit and a crossing unit, and the service unit comprises a first service subunit and a second service subunit. The method comprises the following steps.

Step 102: the first service subunit can divide data T1 which is mapped to T timeslots of N/2 lower backplane buses of the first service subunit into two parts of data T11 and data T12 with the same number of timeslots, and the second service subunit can divide data T2 which is mapped to the T timeslots of the N/2 lower backplane buses of the second service subunit into two parts of data T21 and data T22 with the same number of timeslots, wherein N is the total number of backplane buses of the service unit.

Step 104: the first service subunit and the second service subunit exchange (it can be through an interconnect bus) and recombine the data, wherein the first service subunit obtains data T3 consisting of the T11 and the T21, and the second service subunit obtains data T4 consisting of the T12 and the T22.

Step 106: the first service subunit and the second service subunit send the data T3 and the data T4 to the crossing unit respectively (through the lower backplane buses of the first service subunit), wherein the T11 and the T12 are in the same timeslot, and the T21 and the T22 are in the same timeslot.

Through the above Step 102 to Step 106, the way of interconnecting the service subunits of the OTN equipment is employed to transmit one part of data (for example, T12 or T21) that a single service subunit sends to the crossing unit to another service subunit through an interconnect bus. Then the other service subunit sends the data to the crossing unit. Thus, the non-blocking crossing capacity expansion of the single service subunit is achieved. Therefore, the problem that crossing capacity is restricted due to that electric-layer crossing scheduling in the transport network is limited by the number of high-speed serial buses of the single service subunit is solved, the system cost is reduced and the utilization ratio of system is improved.

Preferably, in Step 102, the first service subunit can divide the T1 into two parts of data T11 and data T12 with the same number of timeslots based on odd and even slots; and the second service subunit can divide the T2 into two parts of data T21 and data T22 with the same number of timeslots based on odd and even slots. This method can make the data be divided evenly and facilitates the extraction of interacted data, so that data from different service subunits can be distinguished.

Preferably, in Step 104, the T12 and the T21 are exchanged through the interconnect bus between the first service subunit and the second service subunit. The first service subunit recombines the T11 and the T21 to obtain T3; and the second service subunit recombines the T12 and the T22 to obtain T4. This method can make more crossing units process each service subunit simultaneously, without actually increasing the number of crossing units. That is, this method exchanges the data in the first service subunit and the data in the second service subunit through the interconnect bus, thereby achieving the purpose of expanding non-blocking crossing capacity and effectively utilizing system resources.

Preferably, in Step 104, the first service subunit can divide data T5 which is received from the crossing unit (that is, the data of an upper backplane bus of the first service subunit) into two parts of data T51 and data T52 with the same number of timeslots and merge the T12 and the T52 into T6; and the second service subunit can divide data T7 which is received from the crossing unit (that is, the data of the upper backplane bus of the second service subunit) into two parts of data T71 and data T72 with the same number of timeslots and merge the T21 and the T71 into T8. The T6 and the T8 are exchanged through the interconnect bus. The first service subunit merges and recovers the T51 and the T71 and de-maps out the corresponding client service data. The second service subunit merges and recovers the T72 and the T52 and de-maps out the corresponding client service data. This method can recover the data divided by the service subunit and de-map out the corresponding service data, so that the purpose of expanding crossing capacity is achieved without impacting the related process.

Preferably, the exchanged data in the interconnect bus comprises a frame header for identifying the data of an upper backplane bus and a frame header for identifying the data of a lower backplane bus. This method can effectively distinguish the data in the interconnect bus, so that different processes can be conducted at the receiving end, and the purpose of expanding crossing capacity and recovering data is achieved.

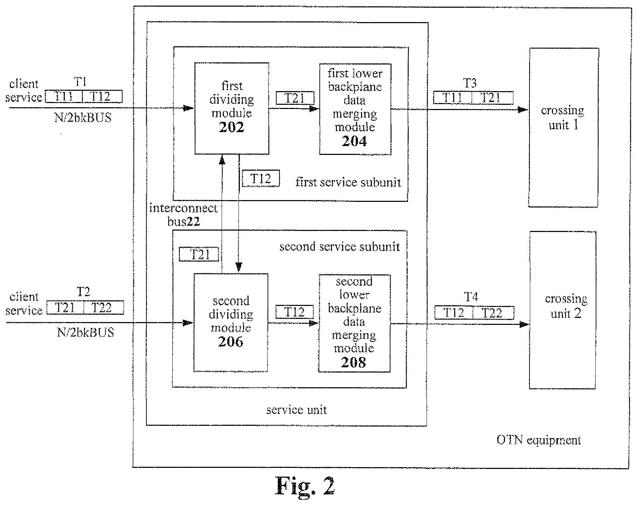

Fig. 2 shows a structure diagram of OTN equipment according to an embodiment of the disclosure. As shown in Fig. 2, the OTN equipment comprises a service unit and a crossing unit, and the service unit comprises a first service subunit, a second service subunit and an interconnect bus 22, wherein the first service subunit comprises a first dividing module 202 and a first lower backplane data merging module 204, the second service subunit comprises a second dividing module 206 and a second lower backplane data merging module 208. This structure is described below in detail.

The interconnect bus 22 is configured to connect the first service subunit with the second service subunit and to exchange data of the first service subunit and the data of the second service subunit.

The first service subunit comprises: the first dividing module 202, configured to divide data T1 which is mapped to T timeslots of N/2 lower backplane buses of the first service subunit into two parts of data T11 and data T12 with the same number of timeslots, wherein N is the total number of backplane buses of the service unit; and the first lower backplane data merging module 204, configured to merge the T11 and T21 into data T3 and to send the T3 to the crossing unit through a first overhead insertion processing module.

The second service subunit comprises: the second dividing module 206, configured to divide data T2 which is mapped to the T timeslots of the N/2 lower backplane buses of the second service subunit into two parts of data T21 and data T22 with the same number of timeslots; and the second lower backplane data merging module 208, configured to merge the T12 and the T22 into data T4 and to send the T4 to the crossing unit through a second overhead insertion processing module;
wherein the T11 and the T12 received by the crossing unit are in the same timeslot, and the T21 and the T22 are in the same timeslot.

Preferably, the first dividing module 202 divides the T1 into two parts of data T11 and data T12 with the same number of timeslots based on odd and even slots; and the second dividing module 206 divides the T2 into two parts of data T21 and data T22 with the same number of timeslots based on odd and even slots.

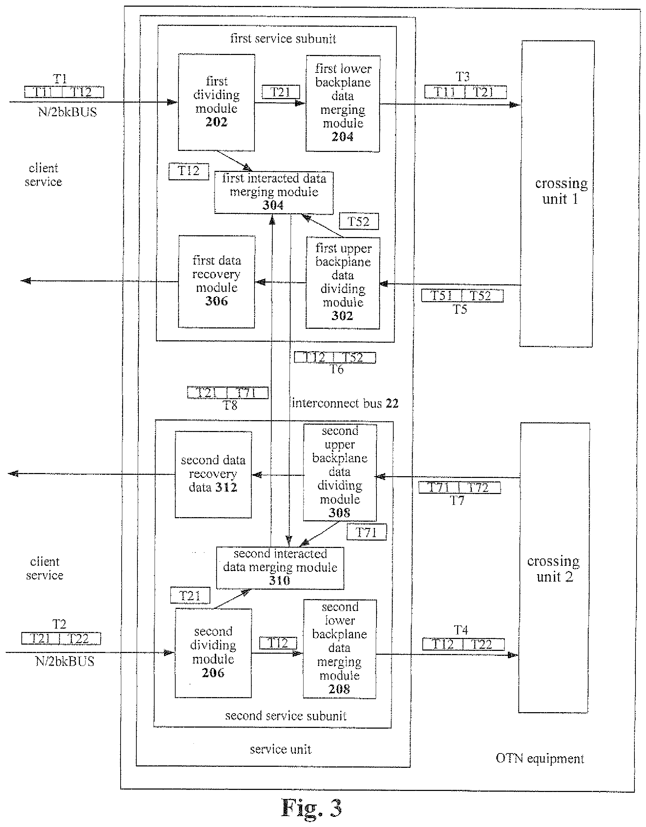

Fig. 3 shows a structure diagram of OTN equipment according to a preferred embodiment of the disclosure, wherein the first service subunit further comprises a first upper backplane data dividing module 302, a first interacted data merging module 304 and a first data recovery module 306; and the second service subunit further comprises a second upper backplane data dividing module 308, a second interacted data merging module 310 and a second data recovery module 312. This structure is described below in detail.

The first service subunit further comprises: the first upper backplane data dividing module 302, configured to divide data T5, which is received from the crossing unit, into two parts of data T51 and data T52 with the same number of timeslots; the first interacted data merging module 304, configured to merge the T12 and the T52 into T6; and the first data recovery module 306, configured to merge and recover the T51 and T71 and to de-map out the corresponding client service data.

The second service subunit further comprises: the second upper backplane data dividing module 308, configured to divide data T7, which is received from the crossing unit, into two parts of data T71 and data T72 with the same number of timeslots; the second interacted data merging module 310, configured to merge the T21 and the T71 into T8; and the second data recovery module 312, configured to merge and recover the T72 and T52 and to de-map out the corresponding client service data. And the interconnect bus is further configured to exchange the T6 and the T8.

Preferably, the first service subunit and the second service subunit are an FPGA chip. This method makes the service subunit in the OTN equipment in the embodiment of the disclosure easy to realize and improves the operability.

Preferably, the exchanged data in the interconnect bus 22 comprises a frame header for identifying the data of an upper backplane bus and a frame header for identifying the data of a lower backplane bus (that is, the received interacted data of the interconnect bus can be effectively divided).

The embodiment of the disclosure expands the crossing capacity by interconnecting the first service subunit with the second service subunit, thereby meeting the requirement of larger crossing capacity and improving the utilization ratio of system.

In addition, the hardware of the device according to the embodiment of the disclosure may consist of a plurality of service units, a plurality of crossing units and one clock unit. The N backplane buses bkBUS of each service unit are connected with M crossing units and work under a uniform system clock and a frame header alignment clock (both the uniform system clock and the frame header alignment clock are contained in the clock unit). Each service unit and each crossing unit are connected through at least one high-speed bus (that is, the backplane bus bkBUS), and each crossing unit has are connected with the same number of interconnect buses. For example, provided that the number of buses connected to each crossing unit is P, then P=N/M. It should be noted that each backplane bus comprises one upper backplane bus (that is, bkBUS in the add direction) and one lower backplane bus (that is, bkBUS in the drop direction)

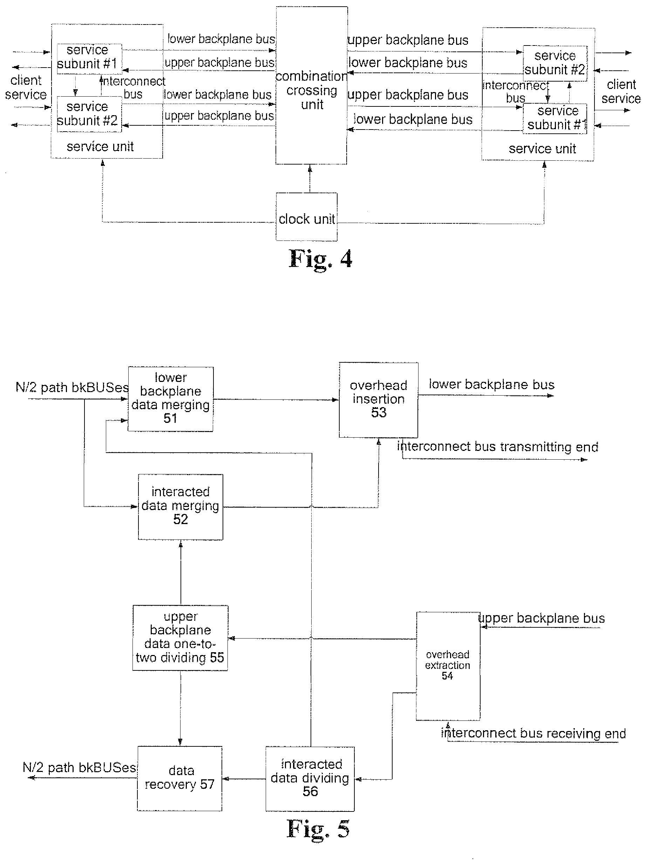

Fig. 4 shows a diagram of a crossing capacity expansion device according to an embodiment of the disclosure. Taking one service unit containing two service subunits for example, the implementation process of the device is illustrated below in detail.

As shown in Fig. 4, each service unit consists of two service subunits (#1 and #2), and each service subunit corresponds to one FPGA. Each FPGA (that is, each service subunit) has N/2 buses bkBUS in the drop direction and N/2 buses bkBUS in the add direction. In one service unit, there is a bidirectional interconnect bus icBUS between the two service subunits, wherein the interconnect bus may consist of a low-speed data bus, and the interconnect bus capacity in each direction should be equal to the lower backplane bus capacity of each service subunit. Generally, the FPGA logic circuit or the Application Specific Integrated Circuit (ASIC) is employed to realize the process of the bkBUS high-speed data service.

The implementation process of the embodiment of the disclosure is described below in detail in conjunction with examples.

Step 1: the source end of the service subunit #1 (#2) maps each path of client service accessing the service subunit to a plurality of identical timeslots of N/2 backplane buses bkBUS after a series of processes. The number of timeslots of the bkBUS data (that is, T1) is assumed to be T at this point.

Step 2: on one hand, the source end of the service subunit #1 (#2) merges data of T/2 odd (even) timeslots (that is, T11) mapped to the bkBUS by this chip (that is, the first service subunit) with data of T/2 even (odd) timeslots (that is, T21) mapped to the bkBUS by the other service subunit, wherein in the merged data (that is, T3) the T/2 odd (even) timeslots of the service subunit #1 are located in the first T/2 timeslots. After the process of overhead insertion etc., the source end of the service subunit #1 (#2) sends the merged data to the crossing unit through the drop bus. On the other hand, the source end of the service subunit #1 (#2) merges data of the other T/2 even (odd) timeslots (T12) mapped to the bkBUS by this chip with data of the latter (first) T/2 timeslots (T52) received by this chip in the add direction, wherein in the merged data (that is, T6), the first T/2 timeslots are data of the T/2 even (odd) timeslots mapped to the bkBUS by this chip. Then after the process of overhead insertion etc., the service subunit #1 (#2) sends the merged data to the other chip (that is, the second service subunit) through the interconnect bus.

Step 3: on one hand, the sink end of the service subunit #1 (#2) performs overhead extraction to the data of N/2 buses bkBUS received in the add direction, then performs one-to-two dividing processing and sends data of the latter (first) T/2 timeslots (that is, T52) to a processing interface of the interconnect bus. On the other hand, after interacted data (that is, T8) from the service subunit #2 (#1) goes through the process of overhead extraction, data of the first T/2 timeslots (that is, T21) is sent to the source end of the service subunit #1 (#2) for the lower backplane data merging process. Data of the other T/2 timeslots (that is, T71) is merged with data of the first (latter) T/2 timeslots (that is, T51) received in the add direction, and then the corresponding client service is de-mapped out and sent out.

Preferably, the data in the interconnect bus in each direction comprises two parts, wherein in half of the timeslots is the data in the drop direction, and in the other half is the data in the add direction. Therefore, in order to process the received data of the interconnect bus correspondingly, a frame header can be set for the two parts of the data transmitted through the interconnect bus by each service subunit respectively, so as to avoid the problem that the data can not be extracted due to data corruption caused by delay.

Hence, the steps above can distribute each path of client service data to a plurality of identical timeslots of N paths bkBUS data, wherein N/2 paths data is from the service subunit #1 and the other N/2 paths data is from the service subunit #2. Thus, in the condition that no interconnect bus exists between the service subunit #1 and the second subunit #2, each service unit at most can connect to N/2 crossing units to realize non-blocking crossing. In the condition that the interconnect bus exists, each service unit at most can connect to N crossing units to realize non-blocking crossing. Thus, the crossing capacity is doubled.

It should be noted that the implementation method of the device above can be extended to the condition that a plurality of service subunits are interconnected. That is, a service unit contains more than two service subunits and there is a bidirectional interconnect bus between every two service subunits. Each path of client service data is mapped through the bkBUS and processed through timeslot dividing and merging by the service subunit. Finally the data is allocated to a plurality of identical timeslots consisting of the timeslots of the bkBUS of these service subunits. Thus, the non-blocking crossing capacity can be increased by many times.

Fig. 5 shows a structure diagram of a service subunit of OTN equipment according to a preferred embodiment of the disclosure, wherein the service subunit comprises: a lower backplane data merging module 51, an interacted data merging module 52, an overhead insertion module 53, an overhead extraction module 54, an upper backplane data one-to-two dividing module 55, an interacted data dividing module 56 and a data recovery module 57. The function of each module of the service subunit is described below in detail.

The lower backplane data merging module 51 is configured to merge data of T/2 timeslots mapped to bkBUS by this chip with data of T/2 timeslots mapped to the bkBUS by the other chip to form an intervening sequence, to send the intervening sequence to the overhead insertion module 53, and then to send the intervening sequence to a crossing unit through the lower backplane bus of this chip.

The interacted data merging module 52 is configured to interleave data of the other T/2 timeslots mapped to the bkBUS by this chip with data of the T/2 timeslots in the add direction to form data of T timeslots, and after data of the T timeslots is processed by the overhead insertion module 53, to send data of the T timeslots to the other chip through an interconnect bus.

The overhead insertion module 53 is configured to take charge of the overhead insertion. It should be noted that each path of data on the interconnect bus has two frame headers, and that the drop part and the add part use a different frame header respectively.

The overhead extraction module 54 is configured to extract overhead. During the process of extraction, in order to distinguish the drop part data and the add part data, it is necessary to add two frame headers. The drop part frame header is used to extract the drop part data, and the add part frame header is used to extract the add part data.

The upper backplane data one-to-two dividing module 55 is configured to divide the bkBUS data in the add direction into two parts based on T timeslots, wherein data of T/2 timeslots goes to the interacted data merging module 52 and thus to the other chip, and data of the other T/2 timeslots goes to the data recovery module 57.

The interacted data dividing module 56 is configured to receive the data in the interconnect bus and to distinguish the received data according to the drop part and the add part, wherein the drop part data is sent to the lower backplane data merging module 51, and the add part data is sent to the data recovery module 57.

The data recovery module 57 is configured to merge the data sent from the upper backplane data one-to-two dividing module 55 with the data sent from the interacted data dividing module 56 to regenerate a frame to send out.

To sum up, the embodiment of the disclosure expands non-block crossing capacity by interconnecting FPGA chips. This solution solves the problem that crossing capacity is restricted due to that electric-layer crossing scheduling in the transport network is limited by the number of high-speed serial buses of the single FPGA chip. This solution avoids the impact caused by restriction of the number of high-speed serial buses of the single FPGA chip, reduces the system cost, meets the requirement of greater crossing capacity and improves the utilization ratio of system.

Obviously, those skilled in the art should understand that the modules or steps described above can be implemented by a common computer device; the modules or steps can be integrated on a single computing device or distributed on a network composed of a plurality of computing devices; optionally, the modules or steps can be implemented by a programming code executable by a computing device, thus they can be stored in a storage device to be executed by a computing device and executed in a different order in some cases, or manufactured into individual integrated circuit module respectively, or several of them can be manufactured into a single integrated circuit module to implement; in this way, the disclosure is not limited to any combination of specific hardware and software.

The above are only the preferred embodiments of the disclosure and not intended to limit the disclosure. For those skilled in the art, various modifications and changes can be made to the disclosure.

## Claims

1. A crossing capacity processing method for Optical Transport Network, OTN, equipment, wherein the OTN equipment comprises a service unit and a crossing unit, and the service unit comprises a first service subunit and a second service subunit, the method comprises steps of:
dividing, by the first service subunit, data T1, which has been mapped to T timeslots in N/2 lower backplane buses of the first service subunit, into two parts of data T11 and data T12 with same number of timeslots; and dividing, by the second service subunit, data T2, which has been mapped to T timeslots in N/2 lower backplane buses of the second service subunit, into two parts of data T21 and data T22 with same number of timeslots, wherein N is the total number of backplane buses of the service unit (S102);
exchanging through an interconnect bus between the first service subunit and the second service subunit and recombining, by the first service subunit and the second service subunit, so that the first service subunit obtains data T3 consisting of the data T11 and the data T21, and the second service subunit obtains data T4 consisting of the data T12 and the data T22 (S104); and
sending, by the first service subunit and the second service subunit, the data T3 and the data T4 to the crossing unit respectively after a first and second overhead insertion process, wherein the data T11 and the data T12 received by the crossing unit are in the same timeslots, and the data T21 and the data T22 received by the crossing unit are in the same timeslots (S106).

2. The method according to claim 1, **characterized in that** dividing, by the first service subunit, data T1, which has been mapped to T timeslots in N/2 lower backplane buses of the first service subunit, into two parts of the data T11 and the data T12 with same number of timeslots; and dividing, by the second service subunit, data T2, which has been mapped to T timeslots in N/2 lower backplane buses of the second service subunit, into two parts of the data T21 and the data T22 with same number of timeslots (S102) comprises:
dividing, by the first service subunit, the data T1 into two parts of the data T11 and the data T12 with same number of timeslots based on odd and even timeslots; and dividing, by the second service subunit, the data T2 into two parts of the data T21 and the data T22 with same number of timeslots based on odd and even timeslots.

3. The method according to claim 1 or 2, **characterized in that** exchanging through the interconnect bus between the first service subunit and the second service subunit and recombining by the first service subunit and the second service subunit comprises:
exchanging the data T12 and the data T21 through the interconnect bus;
recombining the data T11 and the data T21 by the first service subunit to obtain the data T3; and
recombining the data T12 and the data T22 by the second service subunit to obtain the data T4.

4. The method according to claim 3, **characterized in that** exchanging through the interconnect bus between the first service subunit and the second service subunit and recombining by the first service subunit and the second service subunit further comprises:
the first service subunit dividing data T5, which is received from the crossing unit, into two parts of data T51 and data T52 with same number of timeslots and merging the data T12 and the data T52 into data T6; and the second service subunit dividing data T7, which is received from the crossing unit, into two parts of data T71 and data T72 with same number of timeslots and merging the data T21 and the data T71 into T8;
exchanging the data T6 and the data T8 through the interconnect bus;
merging and recovering the data T51 and the data T71 and de-mapping out corresponding client service data, by the first service subunit; and
merging and recovering the data T72 and the data T52 and de-mapping out corresponding client service data, by the second service subunit.

5. The method according to claim 4, **characterized in that** exchanging the data T6 and the data T8 through the interconnect bus comprises:
the exchanged data in the interconnect bus comprising a frame header for identifying data of upper backplane bus and a frame header for identifying data of lower backplane bus.

6. An Optical Transport Network, OTN, equipment, comprising a service unit and a crossing unit, and the service unit comprising a first service subunit and a second service subunit,
the service unit further comprises an interconnect bus (22), configured to connect the first service subunit with the second service subunit, and to exchange data of the first service subunit and the second service subunit;
the first service subunit comprises: a first dividing module (202), configured to divide data T1, which has been mapped to T timeslots in N/2 lower backplane buses of the first service subunit, into two parts of data T11 and data T12 with same number of timeslots, wherein N is the total number of backplane buses of the service unit; and a first lower backplane data merging module (204), configured to merge the data T11 and data T21 into data T3 which is sent to the crossing unit (1) through a first overhead insertion processing module; and
the second service subunit comprises: a second dividing module (206), configured to divide data T2, which has been mapped to the T timeslots in the N/2 lower backplane buses of the second service subunit, into two parts of the data T21 and data T22 with same number of timeslots; a second lower backplane data merging module (208), configured to merge the data T12 and the data T22 into data T4 which is sent to the crossing unit through a second overhead insertion processing module;
wherein the data T11 and the data T12 received by the crossing unit are in the same timeslots, and the data T21 and the data T22 received by the crossing unit (2) are in the same timeslots.

7. The equipment according to claim 6, **characterized in that** the first dividing module (202) divides the data T1 into two parts of the data T11 and the data T12 with same number of timeslots based on odd and even timeslots; and the second dividing module (206) divides the data T2 into two parts of the data T21 and the data T22 with same number of timeslots based on odd and even timeslots.

8. The equipment according to claim 6 or 7, **characterized in that**
the first service subunit further comprises: a first upper backplane data dividing module (302), configured to divide data T5, which is received from the crossing unit, into two parts of data T51 and data T52 with same number of timeslots; a first interacted data merging module (304), configured to merge the data T12 and the data T52 into data T6; and a first data recovery module (306), configured to merge and recover the data T51 and data T71 and to de-map out the corresponding client service data;
the second service subunit further comprises: a second upper backplane data dividing module (308), configured to divide data T7, which is received from the crossing unit, into two parts of the data T71 and data T72 with same number of timeslots; a second interacted data merging module (310), configured to merge the data T21 and the data T71 into data T8; and a second data recovery module (312), configured to merge and recover the data T72 and the data T52 and to de-map out the corresponding client service data; and
the interconnect bus is further configured to exchange the data T6 and the data T8.

9. The equipment according to claim 8, **characterized in that** the first service subunit and the second service subunit are Field Programmable Gate Array, FPGA, chips.

10. The equipment according to claim 8, **characterized in that** the exchanged data in the interconnect bus (22) comprises a frame header for identifying data of upper backplane bus and a frame header for identifying data of lower backplane bus.

## Patentansprüche

1. Kreuzungs-Kapazitäts-Verarbeitungsverfahren für ein optisches Transportnetzwerk, OTN, Equipment, wobei das OTN-Equipment eine Serviceeinheit und eine Kreuzungseinheit umfasst, und wobei die Serviceeinheit eine erste Serviceuntereinheit und eine zweite Serviceuntereinheit umfasst, wobei das Verfahren die Schritte umfasst:
Teilen durch die erste Serviceuntereinheit von Daten T1, welche auf T Zeitfenster in N/2 unteren Rückwand-Bussen der ersten Serviceuntereinheit gemappt sind, in zwei Teile von Daten T11 und von Daten T12 mit einer gleichen Anzahl an Zeitfenstern; und Teilen durch die zweite Serviceuntereinheit von Daten T2, welche auf T Zeitfenster in N/2 unteren Rückwand-Bussen der zweiten Serviceuntereinheit gemappt sind, in zwei Teile von Daten T21 und von Daten T22 mit einer gleichen Anzahl an Zeitfenstern, wobei N die gesamte Anzahl von Rückwand-Bussen der Serviceeinheit ist (S102);
Austauschen durch einen Verbindungs-Bus zwischen der ersten Serviceuntereinheit und der zweiten Serviceuntereinheit und Rekombinieren durch die erste Serviceuntereinheit und die zweite Serviceuntereinheit, so dass die erste Serviceuntereinheit Daten T3 erhält, welche aus den Daten T11 und den Daten T21 bestehen, und die zweite Serviceuntereinheit Daten T4 erhält, welche aus den Daten T12 und den Daten T22 bestehen (S104); und
Senden durch die erste Serviceuntereinheit und die zweite Serviceuntereinheit der Daten T3 bzw. der Daten T4 an die Kreuzungseinheit nach einem ersten und einem zweiten Overhead-Einsetz-Prozess, wobei die Daten T11 und die Daten T12, welche durch die Kreuzungseinheit empfangen werden, in den gleichen Zeitfenstern sind, und wobei die Daten T21 und die Daten T22, welche durch die Kreuzungseinheit empfangen werden, in den gleichen Zeitfenstern sind (S106).

2. Verfahren nach Anspruch 1, **dadurch gekennzeichnet, dass** das Teilen der Daten T1 durch die erste Serviceuntereinheit, welche auf T Zeitfenster in N/2 unteren Rückwand-Bussen der ersten Serviceuntereinheit gemapped worden sind, in zwei Teile der Daten T11 und der Daten T12 mit einer gleichen Anzahl an Zeitfenstern; und Teilen durch die zweite Serviceuntereinheit von Daten T2, welche auf T Zeitfenster in N/2 unteren Rückwand-Bussen der zweiten Serviceuntereinheit gemapped worden sind, in zwei Teile der Daten T21 und der Daten T22 mit einer gleichen Anzahl an Zeitfenstern (S102) umfasst:
Teilen der Daten T1 durch die erste Serviceuntereinheit in zwei Teile der Daten T11 und der Daten T12 mit einer gleichen Anzahl an Zeitfenstern auf Grundlage von ungeraden und geraden Zeitfenstern;
und Teilen der Daten T2 durch die zweite Serviceuntereinheit in zwei Teile der Daten T21 und der Daten T22 mit einer gleichen Anzahl an Zeitfenstern auf Grundlage von ungeraden und geraden Zeitfenstern.

3. Verfahren nach Anspruch 1 oder 2, **dadurch gekennzeichnet, dass** das Austauschen durch den Verbindungs-Bus zwischen der ersten Serviceuntereinheit und der zweiten Serviceuntereinheit und das Rekombinieren durch die erste Serviceuntereinheit und die zweite Serviceuntereinheit umfasst:
Austauschen der Daten T12 und der Daten T21 durch den Verbindungs-Bus;
Rekombinieren der Daten T11 und der Daten T21 durch die erste Serviceuntereinheit, um die Daten T3 zu erhalten; und
Rekombinieren der Daten T12 und der Daten T22 durch die zweite Serviceuntereinheit, um die Daten T4 zu erhalten.

4. Verfahren nach Anspruch 3, **dadurch gekennzeichnet, dass** das Austauschen durch den Verbindungs-Bus zwischen der ersten Serviceuntereinheit und der zweiten Serviceuntereinheit und das Rekombinieren durch die erste Serviceuntereinheit und die zweite Serviceuntereinheit ferner umfasst, dass:
die erste Serviceuntereinheit Daten T5, welche von der Kreuzungseinheit empfangen werden, in zwei Teile von Daten T51 und von Daten T52 mit einer gleichen Anzahl an Zeitfenstern teilt und die Daten T12 und die Daten T52 zu Daten T6 zusammenführt; und die zweite Serviceuntereinheit Daten T7, welche von der Kreuzungseinheit empfangen werden, in zwei Teile von Daten T71 und von Daten T72 mit einer gleichen Anzahl an Zeitfenstern teilt und die Daten T21 und die Daten T71 zu T8 zusammenführt;
Austauschen der Daten T6 und der Daten T8 durch den Verbindungs-Bus;
Zusammenführen und Wiederherstellen der Daten T51 und der Daten T71 und De-Mappen von entsprechenden Klienten-Servicedaten durch die erste Serviceuntereinheit; und
Zusammenführen und Wiederherstellen der Daten T72 und der Daten T52 und De-Mappen von entsprechenden Klienten-Servicedaten durch die zweite Serviceuntereinheit.

5. Verfahren nach Anspruch 4, **dadurch gekennzeichnet, dass** das Austauschen der Daten T6 und der Daten T8 durch den Verbindungs-Bus umfasst, dass:
die ausgetauschten Daten in dem Verbindungs-Bus einen Frame-Header zum Identifizieren von Daten des oberen Rückwand-Busses und einen Frame-Header zum Identifizieren von Daten des unteren Rückwand-Busses umfassen.

6. Optisches Transportnetzwerk, OTN, Equipment, umfassend eine Serviceeinheit und eine Kreuzungseinheit, und wobei die Serviceeinheit eine erste Serviceuntereinheit und eine zweite Serviceuntereinheit umfasst,
wobei die Serviceeinheit ferner einen Verbindungs-Bus (22) umfasst, welcher dazu eingerichtet ist, die erste Serviceuntereinheit mit der zweiten Serviceuntereinheit zu verbinden und Daten der ersten Serviceuntereinheit und der zweiten Serviceuntereinheit auszutauschen;
wobei die erste Serviceuntereinheit umfasst: ein erstes Teilermodul (202), welches dazu eingerichtet ist, Daten T1, welche auf T Zeitfenster in N/2 unteren Rückwand-Bussen der ersten Serviceuntereinheit gemapped worden sind, in zwei Teile von Daten T11 und von Daten T12 mit einer gleichen Anzahl an Zeitfenstern zu teilen, wobei N die gesamte Anzahl von Rückwand-Bussen der Serviceeinheit ist; und ein erstes Zusammenführungsmodul für untere Rückwand-Daten (204), welches dazu eingerichtet ist, die Daten T11 und die Daten T21 zu Daten T3 zusammenzuführen, welche zu der Kreuzungseinheit (1) durch ein erstes Overhead-Einsetz-Verarbeitungsmodul gesendet werden; und
wobei die zweite Serviceuntereinheit umfasst: ein zweites Teilermodul (206), welches dazu eingerichtet ist, Daten T2, welche auf die T Zeitfenster in den N/2 unteren Rückwand-Bussen der zweiten Serviceuntereinheit gemapped worden sind, in zwei Teile der Daten T21 und der Daten T22 mit einer gleichen Anzahl an Zeitfenstern zu teilen; und ein zweites Zusammenführungsmodul für untere Rückwand-Daten (208), welches dazu eingerichtet ist, die Daten T12 und die Daten T22 zu Daten T4 zusammenzuführen, welche zu der Kreuzungseinheit durch ein zweites Overhead-Einsetz-Verarbeitungsmodul gesendet werden;
wobei die Daten T11 und die Daten T12, welche durch die Kreuzungseinheit empfangen werden, in den gleichen Zeitfenstern vorliegen, und wobei die Daten T21 und die Daten T22, welche durch die Kreuzungseinheit (2) empfangen werden, in den gleichen Zeitfenstern vorliegen.

7. Equipment nach Anspruch 6, **dadurch gekennzeichnet, dass** das erste Teilermodul (202) die Daten T1 in zwei Teile der Daten T11 und der Daten T12 mit einer gleichen Anzahl an Zeitfenstern auf Grundlage von ungeraden und geraden Zeitfenstern teilt; und dass das zweite Teilermodul (206) die Daten T2 in zwei Teile der Daten T21 und der Daten T22 mit einer gleichen Anzahl an Zeitfenstern auf Grundlage von ungeraden und geraden Zeitfenstern teilt.

8. Equipment nach Anspruch 6 oder 7, **dadurch gekennzeichnet, dass** die erste Serviceuntereinheit ferner umfasst: ein erstes Teilermodul für obere Rückwand-Daten (302), welches dazu eingerichtet ist, Daten T5, welche von der Kreuzungseinheit empfangen werden, in zwei Teile von Daten T51 und von Daten T52 mit einer gleichen Anzahl an Zeitfenstern zu teilen; ein erstes Zusammenführungsmodul für wechselseitig beeinflusste Daten (304), welches dazu eingerichtet ist, die Daten T12 und die Daten T52 zu Daten T6 zusammenzuführen; und ein erstes Daten-Wiederherstellungsmodul (306), welches dazu eingerichtet ist, die Daten T51 und die Daten T71 zusammenzuführen und wiederherzustellen und die entsprechenden Klienten-Servicedaten zu de-mappen;
die zweite Serviceuntereinheit ferner umfasst: ein zweites Teilermodul für obere Rückwand-Daten (308), welches dazu eingerichtet ist, Daten T7, welche von der Kreuzungseinheit empfangen werden, in zwei Teile der Daten T71 und der Daten T72 mit einer gleichen Anzahl an Zeitfenstern zu teilen; ein zweites Zusammenführungsmodul für wechselseitig beeinflusste Daten (310), welches dazu eingerichtet ist, die Daten T21 und die Daten T71 zu Daten T8 zusammenzuführen; und ein zweites Daten-Wiederherstellungsmodul (312), welches dazu eingerichtet ist, die Daten T72 und die Daten T52 zusammenzuführen und wiederherzustellen und die entsprechenden Klienten-Servicedaten zu de-mappen; und
der Verbindungs-Bus ferner dazu eingerichtet ist, die Daten T6 und die Daten T8 auszutauschen.

9. Equipment nach Anspruch 8, **dadurch gekennzeichnet, dass** die erste Serviceuntereinheit und die zweite Serviceuntereinheit Feldprogrammierbare Gate-Array, FPGA, Chips sind.

10. Equipment nach Anspruch 8, **dadurch gekennzeichnet, dass** die ausgetauschten Daten in dem Verbindungs-Bus (22) einen Frame-Header zum Identifizieren von Daten des oberen Rückwand-Busses und einen Frame-Header zum Identifizieren von Daten des unteren Rückwand-Busses umfassen.

## Revendications

1. Procédé de traitement de capacité de croisement pour un équipement réseau de transport optique, OTN, l'équipement OTN comprenant une unité de service et une unité de croisement et l'unité de service comprenant une première sous-unité de service et une deuxième sous-unité de service, ce procédé comprenant les étapes de :
division, par la première sous-unité de service, de données T1, qui ont été mappées à T créneaux temporels dans N/2 bus de fond de panier inférieurs de la première sous-unité de service, en deux parties de données T11 et T12 avec le même nombre de créneaux temporels ; et la division, par la deuxième sous-unité de service, de données T2, qui ont été mappées à T créneaux temporels dans N/2 bus de fond de panier inférieurs de la deuxième sous-unité de service, en deux parties de données T21 et T22 avec le même nombre de créneaux temporels, N étant le nombre total de bus de fond de panier de l'unité de service (S102) ;
échange, par l'intermédiaire d'un bus d'interconnexion, entre la première sous-unité de service et la deuxième sous-unité de service et recombinaison, par la première sous-unité de service et la deuxième sous-unité de service, de façon à ce que la première sous-unité de service obtienne des données T3 constituées des données T11 et des données T21 et à ce que la deuxième sous-unité de service obtienne des données T4 constituées des données T12 et des données T22 (S104) ; et
envoi, par la première sous-unité de service et la deuxième sous-unité de service, des données T3 et des données T4 de l'unité de croisement respectivement après un premier et un deuxième processus d'insertion d'en-tête, les données T11 et les données T12 reçues par l'unité de croisement étant dans les mêmes créneaux temporels et les données T21 et les données T22 reçues par l'unité de croisement étant dans les mêmes créneaux temporels (S106).

2. Procédé selon la revendication 1, **caractérisé en ce que** la division, par la première sous-unité de service, des données T1, qui ont été mappées à T créneaux temporels dans N/2 bus de fond de panier inférieurs de la première sous-unité de service, en deux parties de données T11 et T12 avec le même nombre de créneaux temporels ; et la division, par la deuxième sous-unité de service, de données T2, qui ont été mappées à T créneaux temporels dans N/2 bus de fond de panier inférieurs de la deuxième sous-unité de service, en deux parties de données T21 et T22 avec le même nombre de créneaux temporels (S102) comprend :
la division, par la première sous-unité de service, des données T1 en deux parties de données T11 et T12 avec le même nombre de créneaux temporels sur la base de créneaux temporels impairs et pairs ; et la division, par la deuxième sous-unité de service, de données T2 en deux parties de données T21 et T22 avec le même nombre de créneaux temporels sur la base de créneaux temporels impairs et pairs.

3. Procédé selon la revendication 1 ou 2, **caractérisé en ce que** l'échange par l'intermédiaire du bus d'interconnexion entre la première sous-unité de service et la deuxième sous-unité de service et la recombinaison par la première sous-unité de service et la deuxième sous-unité de service comprend :
l'échange des données T12 et des données T21 par l'intermédiaire du bus d'interconnexion ;
la recombinaison des données T11 et des données T21 par la première sous-unité de service afin d'obtenir les données T3 ; et
la recombinaison des données T12 et des données T22 par la deuxième sous-unité de service afin d'obtenir des données T4.

4. Procédé selon la revendication 3, **caractérisé en ce que** l'échange par l'intermédiaire du bus d'interconnexion entre la première sous-unité de service et la deuxième sous-unité de service et la recombinaison par la première sous-unité de service et la deuxième sous-unité de service comprend en outre :
la division, par la première sous-unité de service, de données T5, qui proviennent de l'unité de croisement, en deux parties de données T51 et T52 avec le même nombre de créneaux temporels et fusion des données T12 et des données T52 en données T6 ; et la division, par la deuxième sous-unité de service, de données T7, qui proviennent de l'unité de croisement, en deux parties de données T71 et T72 avec le même nombre de créneaux temporels et fusion des données T21 et des données T71 en T8 ;
l'échange des données T6 et des données T8 par l'intermédiaire du bus d'interconnexion ;
la fusion et la récupération des données T51 et des données T71 et démappage de données de service client correspondantes, par la première sous-unité de service ; et
la fusion et la récupération des données T72 et des données T52 et démappage de données de service client correspondantes, par la deuxième sous-unité de service.

5. Procédé selon la revendication 4, **caractérisé en ce que** l'échange des données T6 et des données T8 par l'intermédiaire du bus d'interconnexion comprend :
les données échangées dans le bus d'interconnexion comprenant un en-tête de trame pour l'identification des données du bus de fond de panier supérieur et un en-tête de trame pour l'identification des données du bus de fond de panier inférieur.

6. Équipement de réseau de transport optique, OTN, comprenant une unité de service et une unité de croisement, et l'unité de service comprenant une première sous-unité de service et une deuxième sous-unité de service,
l'unité de service comprenant en outre un bus d'interconnexion (22), conçu pour connecter la première sous-unité de service avec la deuxième sous-unité de service et pour échanger des données de la première sous-unité de service et de la deuxième sous-unité de service ;
la première sous-unité de service comprenant : un premier module de division (202), conçu pour diviser des données T1, qui ont été mappées à T créneaux temporels dans N/2 bus de fond de panier inférieur de la première sous-unité de service, en deux parties de données T11 et T12 avec le même nombre de créneaux temporels, N étant le nombre total de bus de fond de panier de l'unité de service ; et
un premier module de fusion de données de fond de panier inférieur (204), conçu pour fusionner les données T11 et les données T21 en données T3 qui sont envoyées à l'unité de croisement (1) par l'intermédiaire d'un premier module de traitement d'insertion d'en-tête ; et
la deuxième sous-unité de service comprenant : un deuxième module de division (206), conçu pour diviser des données T2, qui ont été mappées à T créneaux temporels dans N/2 bus de fond de panier inférieur de la deuxième sous-unité de service, en deux parties de données T21 et T22 avec le même nombre de créneaux temporels ; un deuxième module de fusion de données de fond de panier inférieur (208), conçu pour fusionner les données T12 et les données T22 en données T4 qui sont envoyées à l'unité de croisement par l'intermédiaire d'un deuxième module de traitement d'insertion d'en-tête ;
les données T11 et les données T12 reçues par l'unité de croisement étant dans les mêmes créneaux temporels et les données T21 et les données T22 reçues par l'unité de croisement (2) étant dans les mêmes créneaux temporels.

7. Équipement selon la revendication 6, **caractérisé en ce que** le premier module de division (202) divise les données T1 en deux parties de données T11 et T12 avec le même nombre de créneaux temporels sur la base de créneaux temporels impairs et pairs ; et le deuxième module de division (206) divise les données T2 en deux parties de données T21 et T22 avec le même nombre de créneaux temporels sur la base de créneaux temporels impairs et pairs.

8. Équipement selon la revendication 6 ou 7, **caractérisé en ce que**
la première sous-unité de service comprend en outre : un premier module de division de données de fond de panier supérieur (302), conçu pour diviser des données T5, qui proviennent de l'unité de croisement, en deux parties de données T51 et T52 avec le même nombre de créneaux temporels ; un premier module de fusion de données interactif (304), conçu pour fusionner les données T12 et les données T52 en données T6 ; et un premier module de récupération de données (306), conçu pour fusionner et récupérer les données T51 et les données T71 et pour démapper les données de service client correspondantes ;
la deuxième sous-unité de service comprend en outre : un deuxième module de division de données de fond de panier supérieur (308), conçu pour diviser des données T7, qui proviennent de l'unité de croisement, en deux parties de données T71 et T72 avec le même nombre de créneaux temporels ; un deuxième module de fusion de données interactif (310), conçu pour fusionner les données T21 et les données T71 en données T8 ; et un deuxième module de récupération de données (312), conçu pour fusionner et récupérer les données T72 et les données T52 et démapper les données de service client correspondantes ; et
le bus d'interconnexion est en outre conçu pour échanger les données T6 et les données T8.

9. Équipement selon la revendication 8, **caractérisé en ce que** la première sous-unité de service et la deuxième sous-unité de service sont des puces « Field Programmable Gate Array », FGPA.

10. Équipement selon la revendication 8, **caractérisé en ce que** les données échangées dans le bus d'interconnexion (22) comprennent un en-tête de trame pour l'identification des données du bus de fond de panier supérieur et un en-tête de trame pour l'identification des données du bus de fond de panier inférieur.
